(19) Europäisches Patentamt
European Patent Office
Office européen des brevets

(11) EP 3 445 043 A1

(12) EUROPEAN PATENT APPLICATION
published in accordance with Art. 153(4) EPC

(43) Date of publication:
20.02.2019 Bulletin 2019/08

(51) Int Cl.:
H04N 5/64 (2006.01)     G02B 27/02 (2006.01)

(21) Application number: 17782284.8

(22) Date of filing: 05.04.2017

(86) International application number:
PCT/JP2017/014190

(87) International publication number:
WO 2017/179467 (19.10.2017 Gazette 2017/42)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 12.04.2016 JP 2016079308

(71) Applicant: Brother Kogyo Kabushiki Kaisha
Nagoya-shi, Aichi 467-8561 (JP)

(72) Inventor: ISHII, Daisuke
Nagoya-shi
Aichi 467-8561 (JP)

(74) Representative: J A Kemp
14 South Square
Gray's Inn
London WC1R 5JJ (GB)

(54) HEAD-MOUNTED DISPLAY WITH EYE CUP

(57) An eyecup-attached head-mounted display in which a display part can be stably held at a position where an eyecup contacts a face of a user is provided. The eyecup-attached HMD 1 includes a mounting fixture 8, a holding mechanism 15, a display part 30 and an eyecup 150. The mounting fixture 8 includes pads 8D and 8E which can contact the head of the user. The holding mechanism 15 holds the display part 30 so as to be movable relative to the mounting fixture 8. The pads 8D and 8E and the holding mechanism 15 serve as a holding means 80 to hold the display part 30. The eyecup 150 has a elastically deformable main body and is attached to the display part 30. A magnitude of a force with which the holding means 80 holds the display part 30 is equal to or larger than a maximum magnitude of an elastic force which is generated as the main body is compressed, for example, in a font-rear direction.

FIG. 1

EP 3 445 043 A1

## Description

## TECHNICAL FIELD

The present disclosures relate to an eyecup-attached head-mounted display.

## BACKGROUND ART

Conventionally, there has been known an eyecup-attached head-mounted display which is a head-mounted display attached with an eyecup. For example, the eyecup-attached head-mounted display disclosed in Patent Document 1 includes a cover, which is an example of the eyecup, and a display device, which is an example of the head-mounted display. The cover is formed with elastic material. The cover has a mounting opening, an eye side opening and a projection member. The mounting opening is opened upward. The eye side opening is opened toward an eye of a user. An internal space of the mounting opening and an internal space of the eye side opening communicate with each other. The projection member cylindrically projects from a peripheral part of the eye side opening and restricts external light from incident on the eye of the user. The display device is inserted to the mounting opening from above.

## PRIOR ART DOCUMENT

PATENT DOCUMENTS

[Patent Document 1] Japanese Patent Provisional Publication No. 2013-186330

## SUMMARY OF THE INVENTION

PROBLEM TO BE SOLVED

It is thought that the head-mounted display as described above is provided with a head mounting part and a supporting part. The head mounting part is mounted on a head of the user. The supporting part is provided to the head mounting part and movably supports the display device. It is further thought that the user pushes the projection member on to a face of the user at a portion around the eye of the user so as to contact closely. However, the cover, which is elastically deformed as it is pushed on to the face of the user, receives reaction force from the face of the user. Then, there may occur a case where the display device moves to a position where the projection member is separated from the face of the user, and there is a possibility that the external light is restricted insufficiently.

An object of the present disclosures is to provide an eyecup-attached head-mounted display which is configured to stably hold the display part at a position where the eyecup contacts the face of the user.

MEANS FOR SOLVING THE PROBLEM

An eyecup-attached head-mounted display according to the present disclosures has a head-mounted display including a display part configured to display an image, a head mounting part to be mounted on a head of a user, and a holding means provided to the head mounting part and configured to hold the display part, and an eyecup formed of material which blocks light or lowers intensity of light, and configured to be attached to the display part. The eyecup includes a main body which is elastically deformable, a mounting section provided to the main body and to be mounted on the display part, and a first opening arranged on an opposite side to the mounting section with respect to the main body, the first opening being opened to expose at least a part of the display part. The holding means includes a holding mechanism configured to hold the display part so as to be movable relative to the head mounting part. A magnitude of a force with which the holding means holds the display part is equal to or larger than a maximum magnitude of an elastic force which is generated as the main body is elastically deformed in a direction where the first opening and the mounting section approach each other.

According to the above configuration, the force with which the holding means holds the display part is larger than the reactional force the eyecup receives from the face of the user. Therefore, the display part is continuously held, by the holding means, at a desired position on the face of the user where the user press-contacts the eyecup, and the eyecup can continuously maintain the state that the eyecup is elastically deformed to provide the user-desired light-blocking state and wearing feel. Therefore, the eyecup-attached head-mounted display can continuously maintain the user-desired light blocking state and wearing feel at a position where the eyecup contacts the face of the user. As above, the eyecup-attached head-mounted display can stably hold the display part at a position where the eyecup contacts the face of the user.

In the eyecup-attached head-mounted display above, the mounting section may include a first engaging section configured to engage with the display part, and a magnitude of a force with which the first engaging section engages with the display part may be equal to or larger than the maximum magnitude of the elastic force. In such a case, as the magnitude of the force with which the first engaging section engages with the display part is equal to or larger than the maximum magnitude of the elastic force, even if the eyecup receives the reactional force from the face of the user, a positional relationship between the eyecup and the display part does not change. The display part is continuously held at the desired position at which the user press-contacts the eyecup onto the user's own face, and the eyecup can continuously maintain the state that the eyecup is elastically deformed to provide the user-desired light-blocking state and wearing feel.

In the eyecup-attached head-mounted display above, the eyecup may have a second opening, which is provided to the main body and different from the first opening, and through which the holding mechanism is inserted. Since the holding mechanism is inserted through the second opening, the eyecup is hardly dropped off from the display part, and the eyecup is prevented from being lost.

In the eyecup-attached head-mounted display above, the second opening may have an elliptical shape. The user can finely adjust the position at which the display part is attached to the eyecup in the major axis direction of the second opening. Therefore, the display part can easily be held at the user-desired position.

In the eyecup-attached head-mounted display above, the display part includes an image forming part configured to emit image light as formed, and a reflecting part arranged on an emit direction side with respect to the image forming part, the image forming part emitting the image light in the emit direction, the reflecting part being inclined with respect to an optical axis of the image light emitted by the image forming part, the reflecting part reflecting at least a part of the image light in a first direction intersecting the emit direction. The eyecup may have a switching section integrally arranged at an end of the mounting section and may be configured to elastically be deformed between a first position and a second position, the first position being a position spaced from a particular position at which the switching section faces the reflecting part from the first direction and covers at least a part of the reflecting part, the second position being a position spaced from the particular position and spaced further from the reflecting part in comparison with a case where the switching section is located at the first position. In this case, the user can adjust the external light incident on the user's own eye by switching the switching section between the first position and the second position. Further, as the eyecup is a single member having the switching section, the manufacturing cost can be cut. Further, since the user can switch the position of the switching section without using another member, the user's labor to switch the position of the switching section can be reduced.

In the eyecup-attached head-mounted display above, the reflecting part may be a half mirror through which external light can pass. As the switching part is arranged at the second position, usage superimposing reflected image light reflected by the half mirror with the external light (Augmented Reality: hereinafter, referred to as AR) becomes possible. Further, as the switching section is arranged at the first position, usage that the switching section blocks the external light (Virtual Reality: hereinafter, referred to as VR) becomes possible. Accordingly, the user can perform the usage as the AR and the usage as the VR with a single member of the eyecup provided with the switching section.

In the eyecup-attached head-mounted display above, the switching section located at the second position may be located on the emit direction side with respect to the reflecting part. A portion that covers the reflecting part when the switching section is located at the second position does not block the viewing field of the user as located within a blind area of the viewing field of the user. Therefore, the user can use the eyecup-attached head-mounted display without discomfort.

In the eyecup-attached head-mounted display above, the head-mounted display includes an operation part provided to the display part, operations regarding the display part being performed through the operation parts, and the eyecup may have a third opening which exposes the operation part, the third opening being closed by the display part. As the operation part is exposed even in a state where the eyecup is attached, the display part can be operated without removing the eyecup. Accordingly, the user can easily operate the display part.

In the eyecup-attached head-mounted display above, the display part includes an image forming part configured to emit image light as formed, and a reflecting part arranged on an emit direction side, with respect to the image forming part, in which the image forming part emits the image light, the reflecting part being inclined with respect to an optical axis of the image light emitted by the image forming part, the reflecting part reflecting at least part of the image light to a first direction intersecting with the emit direction, and the second opening may have an elliptical shape elongated in a direction parallel with tire first direction. The user can adjust the position at which the display part is attached to the eyecup in a direction to move closer to or farther from the user's own eye.

In the eyecup-attached head-mounted display above, the display part includes an image forming part configured to emit image light as formed, and a reflecting part arranged on an emit direction side, with respect to the image forming part, in which the image forming part emits the image light, the reflecting part being inclined with respect to an optical axis of the image light emitted by the image forming part, the reflecting part reflecting at least part of the image light to a first direction intersecting with the emit direction. The mounting section may include a second engaging section extending in a peripheral direction based on an optical axis of the image forming part, and engaging with the display part, and the eyecup may have a position adjustment part configured to position an engaging position where the second engaging section engages with the display part. As the position of the position adjustment part coincides with the position where the image light is emitted, the user can intuitively understand the mounting direction of the head-mounted display with respect to the reflecting part.

**BRIEF DESCRIPTION OF THE DRAWINGS**

Fig. 1 is a front view of an eyecup-attached HMD 1.

Fig. 2 is a cross-sectional view of a first holding part 110 taken along line A-A and viewed along a direction of arrows of line A-A shown in Fig. 1.

Fig. 3 is a cross-sectional view of a display part 30 taken along line B-B and viewed along a direction of arrows B-B shown in Fig. 1.

Fig. 4 is a plan view of an eyecup 150 when a switching section 159B is located at a first position.

Fig. 5 is a perspective view of the eyecup 150.

Fig. 6 is a plan view of the eyecup 150 held by the user.

Fig. 7 is a plan view of the eyecup 150 when the switching section 159B is located at a second position.

Fig. 8 is a right side view of an eyecup 151.

Fig. 9 is a plan view of an eyecup-attached HMD 2.

Fig. 10 is a rear view of the eyecup-attached HMD 2.

## DESCRIPTION OF THE EMBODIMENTS

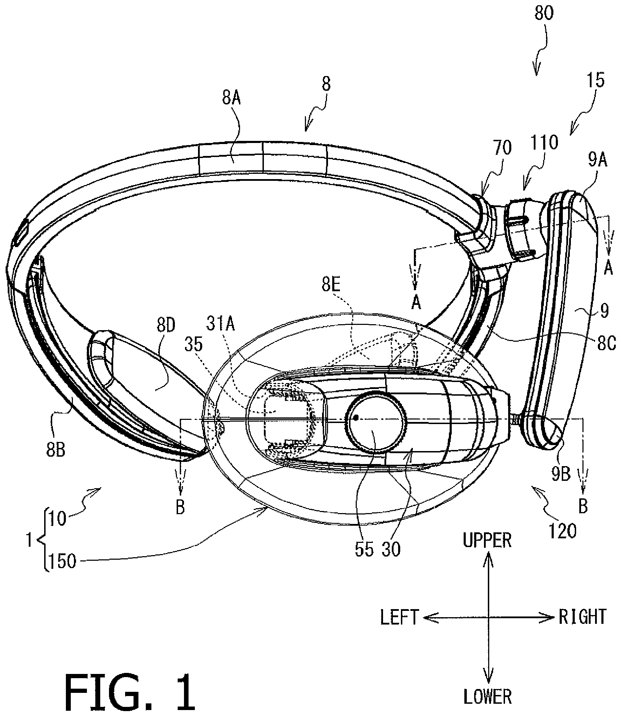

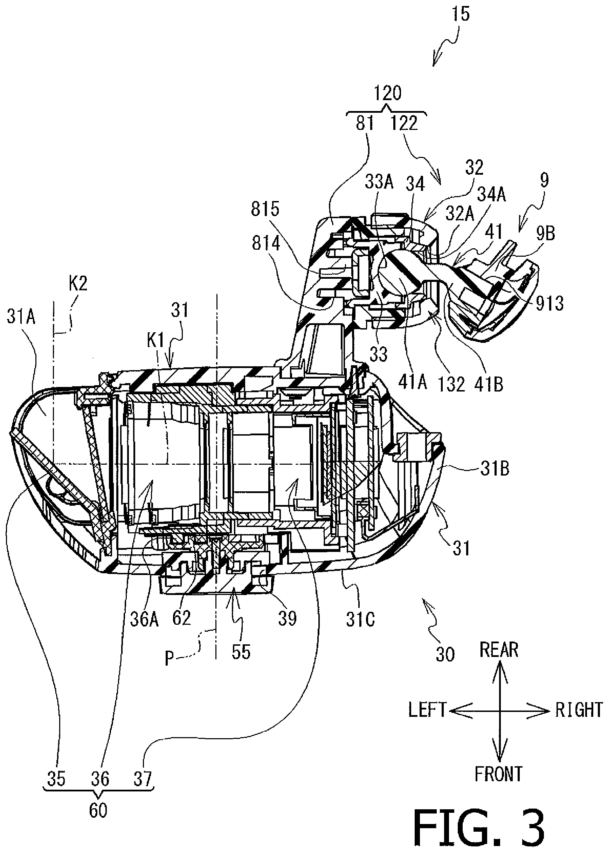

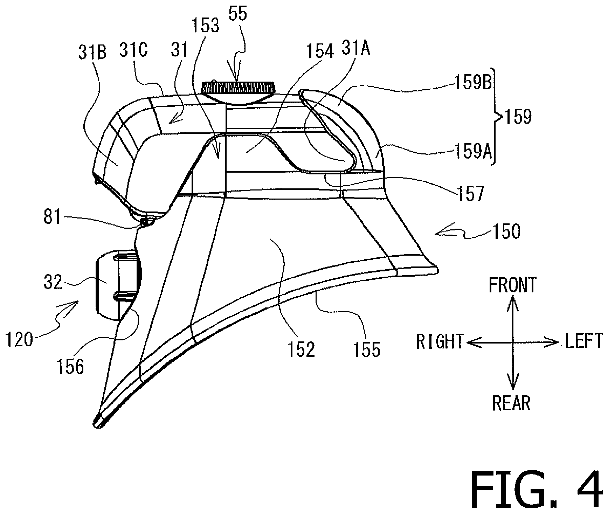

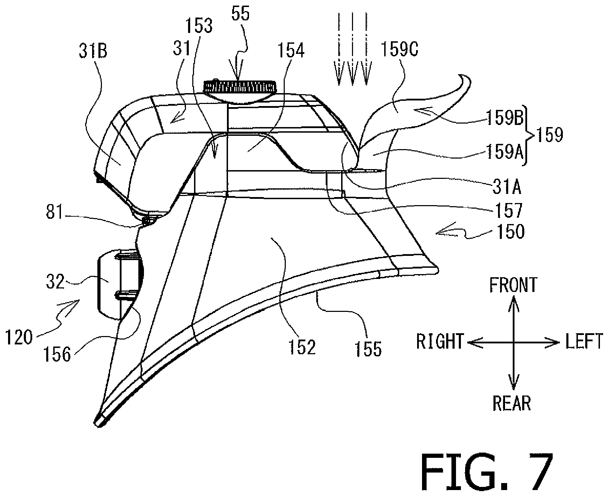

Hereinafter, a head-mounted display (hereinafter, referred to as HMD) which is an embodiment of the present disclosures will be described. Figs. 1 - 8 shows an eyecup-attached HMD 1 which is a first embodiment of the present disclosures. Preceding to a detailed description of a configuration of the eyecup-attached HMD 1, a general description of the eyecup-attached HMD 1 will be provided. The eyecup-attached HMD 1 is used, for example, by a user with naked eyes. In the eyecup-attached HMD 1, image light generated and emitted by an image light generation part 37 (see Fig. 3) is reflected by a reflecting part 35 (see Fig. 1) and is directed toward an eye of the user. The user recognizes the light reflected by the image light generation part 37. The eyecup-attached HMD 1 can be used such that the user visually recognizes the generated image light with external light being superimposed thereon (known as Augmented Reality: hereinafter, referred to as AR) or the user visually recognizes the generated image light with blocking the external light (known as Virtual Reality: hereinafter, referred to as VR). The user can switch the usage of the eyecup-attached HMD 1 between the AR and VR by elastically displacing a switching section 159B of the eyecup 150 between a first position (see Fig. 4) and a second position (see Fig. 7). A projection type of an HMD 10 of the eyecup-attached HMD 1 is a virtual image projection type.

Hereinafter, in order to assist in understanding the description of the drawings, an upper side, a lower side, a left side, a right side, a front side and a rear side of the eyecup-attached HMD 1 will be defined. The upper side, the lower side, the front side, the rear side, the left side and the right side of the eyecup-attached HMD 1 respectively correspond, for example, to an upper side, a lower side, a front side, a rear side, a left side and a right side indicated in Fig. 1. The upper side, the lower side, the rear side, the front side, the left side and the right side of the eyecup-attached HMD 1 respectively correspond to an upper side, a lower side, a rear side, a front side, a right side and a left side of the user to whom the mounting fixture 8 is mounted.

Referring to Figs. 1 - 6, a configuration of the eyecup-attached HMD 1 will be described in detail. The eyecup-attached HMD 1 has the HMD 10 (see Fig. 1) and the eyecup 150. The HMD 10 has the mounting fixture 8, a holding mechanism 15, and a display part 30. The eyecup 150 is attached to the display part 30. The mounting fixture 8 is a plate-like member of which rear part is configured to ring-open, and mountable onto a head of the user. The holding mechanism 15 is a mechanism connecting the mounting fixture 8 and the display part 30, and holds the display part 30 so as to be relatively moveable with respect to the mounting fixture 8. The eyecup 150 is attached to the display part 30. Hereinafter, the holding mechanism 15, the display part 30 and the eyecup 150 are collectively referred to as a "mount body". When the image light is incident on a left eye of the user, the mount body is mounted on a right front part of the mounting fixture 8. When the image light is incident on a right eye of the user, the mount body is mounted on a left front part of the mounting fixture 8. In the following description, a configuration of the eyecup-attached HMD 1 will be described based on a state where the image light can be incident on the left eye of the user. It is noted that the eyecup 150 is omitted in Fig. 3.

As indicated in Fig. 1, the mounting fixture 8 has a first section 8A, second sections 8B and 8C, and pads 8D and 8E. Each of the first section 8A and the second sections 8B and 8C is a curved narrow elongated plate member. The first section 8A extends in a right-left direction and convexly curved frontward. The second section 8B extends from one end (e.g., a left side end) portion of the first section 8A. The second section 8C extends from the other end (e.g., a right side end) portion of the first section 8A. The second sections 8B and 8C extend in a direction where end portions on opposite sides (e.g., rear sides) to the end portions connected with the first section 8A approach to each other. The pad 8D is provided to a rear end side on an inner surface of the second section 8B, and the pad 8E is provided to a rear end side on an inner surface of the second section 8C. The pads 8D and 8E are formed, for example, of elastic resin such as silicon resin.

The user makes the head penetrate inside the mounting fixture 8 with stretching an open-ring part of the mounting fixture 8. The first section 8A and the pads 8D and 8E of the mounting fixture 8 respectively contact a front part, a right side and a left side of the head of the user. Thereafter, as the user releases his/her hands from the mounting fixture 8, the mounting fixture 8 is fixed with pinching the head of the user. When, for example, a frontward force is applied to the mounting fixture 8, a static friction force is applied between the head of the user and the pads 8D and 8E, and the mounting fixture 8 is hardly shifted in the font-rear direction with respect to the head of the user.

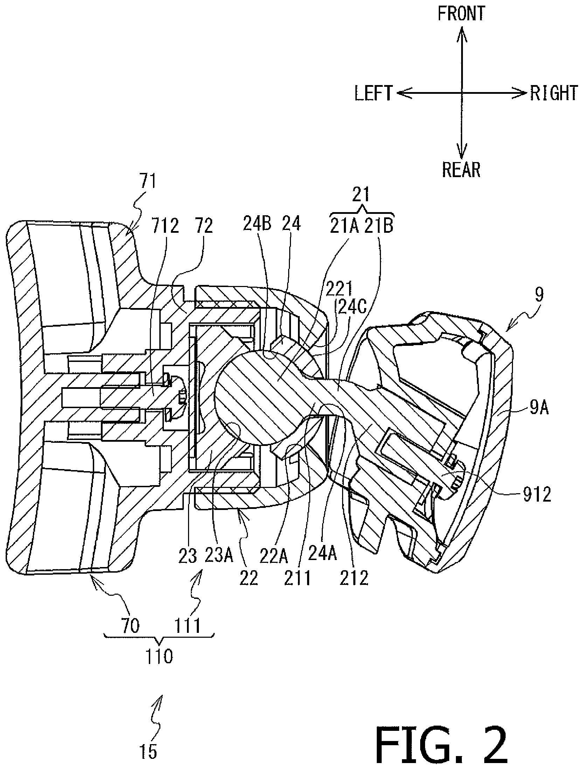

Referring to Figs. 2 and 3, the holding mechanism 15 will be described. The holding mechanism 15 has a first holding part 110, an arm 9, and a second holding part 120. The first holding part 110 is provided to the mounting fixture 8. The second holding part 120 is provided to the display part 30. The arm 9 is a plate-like member connecting the first holding part 110 and the second holding part 120.

As shown in Fig. 2, the first holding part 110 has a connection member 70 and a first ball joint 111. The connection member 70 includes a connection section 71 and a cylindrical section 72. The connection section 71 detachably/attachably connected to a right front part of the first section 8A (see Fig. 1). The connection section 71 contacts the upper side, the lower side and the outer side portions of the first section 8A. The connection section 71 is secured to the right front portion of the first section 8A with a screw 712. The cylindrical section 72 is a cylindrical member. The cylindrical section 72 protrudes rightward from the connection section 71. A right end portion of the cylindrical section 72 is opened. On an outer surface of the right end portion of the cylindrical section 72, a screw thread is formed. On the outer surface of the right end portion of the cylindrical section, a socket 22, which will be described later, is screwed.

The first ball joint 111 has a first ball stud 21, a socket 22, an accommodation part 23 and a pressing part 24. The first ball stud 21 includes a sphere section 21A and a rod section 21B. The sphere section 21A is a ball-shaped portion. The rod section 21B is a cylindrical columnar portion extending rightward from the sphere section 21A. A diameter of the cross section of the rod section 21B is smaller than a diameter of the sphere section 21A. The rod section 21B includes a first extending section 211 and a second extending section 212. The first extending section 211 extends rightward from the sphere section 21A. The second extending section 212 extends crossingly to the first extending section 211, from the right end portion of the first extending section 211. An end portion of the second extending section 212 opposite to the first extending section 211 side end is secured to an end portion 9A of the arm 9 with a screw 912.

The accommodation part 23 is accommodated inside the cylindrical section 72 of the connection member 70. One a right side surface of the accommodation part 23, a spherical recess 23A is formed. The recess 23A contacts a substantially left half of the sphere section 21A of the first ball stud 21 from left. The pressing part 24 is a hemispherical plate member curved rightward. The pressing part 24 has a circular hole 24A pierced in the right-left direction. The rod section 21B of the first ball stud 21 is inserted in the hole 24A. A wall part 24B corresponding to an inner surface of the pressing part 24 contacts a substantially right half of the sphere section 21A of the first ball stud 21 from right. The sphere section 21A is nipped by a recess 23A of the accommodation part 23 and the wall part 24B of the pressing part 24 from the right and left sides.

The socket 22 is a cylindrical member extending in the right-left direction. An inner diameter of the socket 22 is substantially the same as an outer diameter of the right end portion of the cylindrical section 72. On an inner surface at a left end portion of the socket 22, a screw thread is formed. The screw thread engages with the screw thread formed on the outer surface of the cylindrical section 72. With the above configuration, the socket 22 is connected to the connection member 70. The sphere section 21A, the accommodation part 23 and the pressing part 24 of the first ball stud 21 are accommodated in a space surrounded by the cylindrical section 72 and the socket 22.

On a right end portion of the socket 22, a wall part 221 which extends with being curved toward a center is formed. A circular hole 22A pierced in the right-left direction is formed on the wall part 221. The rod section 21B of the first ball stud 21 is inserted in the hole 22A. An inner surface of the hole 22A of the wall part 221 contacts an outer surface 24C of the pressing part 24 from right. A part of the pressing part 24 on the right side protrudes outside the socket 22 from the hole 22A.

In a state where the socket 22 is screw-engaged to the cylindrical section 72, the wail part 221 of the socket 22 presses the pressing part 24 leftward. The sphere section 21A of the first ball stud 21 when contacting the wall part 24B of the pressing part 24 moves leftward as pressed by the pressing part 24, and is press-contacted against the accommodation part 23. With this configuration, a state where the sphere section 21A is nipped by the accommodation part 23 and the pressing part 24 from the right and left sides is maintained.

The first ball stud 21 is rotatable about the sphere section 21A within a range where the rod section 21B does not contact the hole 22A of the wall part 221 of the socket 22. In association with rotation of the first ball stud 21, the sphere section 21A slidably moves with respect to each of the recess 23A and the wall part 24B, and the arm 9 rotates, with respect to the mounting fixture 8, about the sphere section 21A.

Referring to Fig. 3, a configuration of the second holding part 120 will be described. The second holding part 120 has a connection member 81 and a second ball joint 122. The connection member 81 is a substantially prismatic member extending in the front-rear direction. A front end of the connection member 81 is connected to the display part 30. On a right surface of a rear portion of the connection member 81, a connection recess 814, which is a recess depressed leftward, is formed. At a central part of the connection recess 814, a cylindrical section 815 extending rightward is provided. Between an inner surface of the connection recess 814 and the cylindrical section 815, a connection section (not shown) which is connected to the second boll joint 122 is inserted, thereby the second ball joint 122 and the connection member 81 being connected.

A configuration of the second ball joint 122 is substantially the same as that of the first ball joint 111 except for a partial configuration. In the following description, in order to avoid duplicated description of the first ball joint 111 above, description of the second ball joint 122 will be simplified. The second ball joint 122 has a second ball stud 41, a socket 32, an accommodation part 33 and a pressing part 34. The second ball stud 41, the socket 32, the accommodation part 33 and the pressing part 34 respectively correspond to the first ball stud 21, the socket 22, the accommodation part 23 and the pressing part 24 of the first ball joint 111 (see Fig. 2). The shape of the socket 32 is the same as the shape of the socket 22 of the first ball joint 111. Shapes of the accommodation part 33 and the pressing part 34 are slightly different from the shapes of the accommodation part 23 and the pressing part 24 of the first ball joint 111, respectively. However, detailed description thereof will be omitted.

The second ball stud 41 includes a sphere section 41A and a rod section 41B. Shapes of the sphere section 41A and the rod section 41B are the same as the shapes of the sphere section 21A and the rod section 21B of the first ball stud 21 (see Fig. 2). A substantially left half of the sphere section 41A contacts a recess 33A formed on a right side surface of the accommodation part 33. The right side portion of the sphere section 41A partially contacts the pressing part 34. An end of the rod section 41B at an opposite position to the sphere section 41A is secured to the other end 9B of the arm 9 with a not-shown screw. The rod section 41B is inserted through the hold 34A of the pressing part 34 and the hole 32A of the socket 32, and is protruded rightward with respect to the socket 32.

The second ball joint 122 is rotatable about the sphere section 41A. In association with rotation of the second ball joint 122, the sphere section 41A slidably moves with respect to each of the recess 33A and the pressing part 34, and the display part 30 rotates with respect to the arm 9.

Referring to Fig. 3, a configuration of the display part 30 will be described. The display part 30 has a main body 31, an operation part 55 and an optical system unit 60. The main body 31 has a hollow box shape extending in the right-left direction. A left end portion of the main body 31 is a main body opening 31A. A right end portion of the main body 31 is a closed base end section 31B. A rear surface of the base end section 31B is connected to a front end of the connection member 81. Accordingly, in association with rotation of the second ball joint 122 about the sphere section 41A, the main body 31 can rotate about the arm 9.

At a substantially central portion, in the right-left direction, of a front wall part 31C of the main body 31, a hole 39 is formed. The hold 39 is pierced on the front wall 31C in the front-rear direction. The operation part 55 is a substantially cylindrical dial provided at the hole 39 of the front wall part 31C. A rear portion of the operation part 55 is arranged inside the main body 31, while a front portion of the operation part 55 protrudes frontward with respect to the front wall part 31C. The operation part 55 is rotatable about a rotational axis P. The rotational axis P is a virtual axis pierced through the hole 39 and extending in the front-rear direction. On a rear surface of the operation part 55, a cam groove 62 is formed. The cam groove 62 acutely extends such that a clearance with respect to the rotational axis P changes along a peripheral direction about the rotational axis P.

The optical system unit 60 is accommodated inside the main body 31. The optical system unit 60 has an image light generation part 37, a lens unit 36 and a reflecting part 35. The image light generation part 37 is arranged on a right side of the main body 31. The image light generation part 37 has a well-known liquid crystal panel (not shown) and is connected to a cable (not shown). The cable is drawn out of the main body 31 through a hole (not shown) formed at the base end section 31B and is connected to an external device (not shown). The liquid crystal panel generates the image light based on image information the image light generation part 37 obtains through the cable. The liquid crystal panel emits the generated image light leftward. It is noted that, instead of the liquid crystal panel, another two dimensional display device such as a Digital Mirror Device (DMD), or an organic EL display may be used. Alternatively, instead of the liquid crystal panel, a retina scanning type projecting device which projects two-dimensional scanning light on a retina of the user may be used.

The lens unit 36 is arranged on a left side with respect to the image light generation part 37. The lens unit 36 includes a plurality of lenses (not shown). The plurality of lenses collects the light emitted by the image light generation part 37, and directs the collected light toward the main body opening 31A. The lens unit 36 is movably held by the main body 31 so as to be movable in the right-left direction. The lens unit 36 has a convex part 36A at a front side end thereof. The convex part 36A engages with a cam groove 62 of the operation part 55. When the user rotates the operation part 55 about the rotational axis P, the lens unit 36 moves leftward or rightward. By moving the lens unit 36, a focal distance of the image light emitted by the image light generation part 37 changes. Accordingly, the user can adjust a focus of the display part 30.

The reflecting part 35 is arranged on the left side with respect to the lens unit 35, and is held by the main body opening 31A. The reflecting part 35 is, for example, a plate-like member extending from a right front side to a left rear side. The reflecting part 35 is, for example, a half mirror through which the external light can pass through. According to the present embodiment, the reflecting part 35 reflects part (e.g., 50 %) of light incident on the reflective surface rearward, and allows the other part of light to pass through. In other words, the reflecting part 35 reflects at least part of the light incident on the reflective surface rearward. The reflective surface of the reflecting part 35 is, for example, formed by evaporating metal such as aluminum or silver on a transparent resin or glass substrate so as to realize a particular reflection rate (e.g., 50 %). The reflecting part 35 may be another deflecting element, for example, a total reflection mirror, a diffraction grating, a prism, or hologram. Further, a direction of the light reflected by the reflecting part 35 may be, for example, a right rear direction or a left rear direction, instead of a rear direction.

The reflecting part 35 reflects the image light introduced by the lens unit 36 rearward so as to be incident on the left eye of the user. The user can visually recognize a virtual image based on the image light reflected by the reflecting part 35. That is, a position at which the reflecting part 35 reflects the image light toward the user is a position the display part 30 displays the image for the user. In the following description, an optical axis of light directed from the display part 30 to reach the reflecting part 35 will be referred to as an optical axis K1, and a ray of light emitted from the reflecting part 35 will be referred to as an imaginary line K2. The optical axis K1 and the imaginary line K2 orthogonally cross, at a position where the reflecting part 35 is arranged, to each other. Further, the reflecting part 35 is inclined with respect to the optical axis K1.

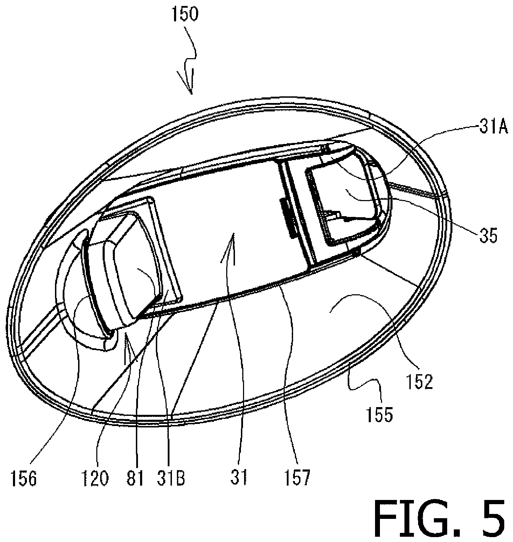

Referring to Figs. 4 and 5, a configuration of the eyecup 150 will be described. The eyecup 150 is attached onto an outer surface of the main body 31 of the display part 30. The eyecup 150 is capable of block light, and is formed of elastically deformable material. The eyecup 150 is made, for example, of silicon rubber. Hereinafter, with a state where the eyecup 150 is attached to the main body 31 of the display part 30 as a reference state, a configuration of the eyecup 150 will be described.

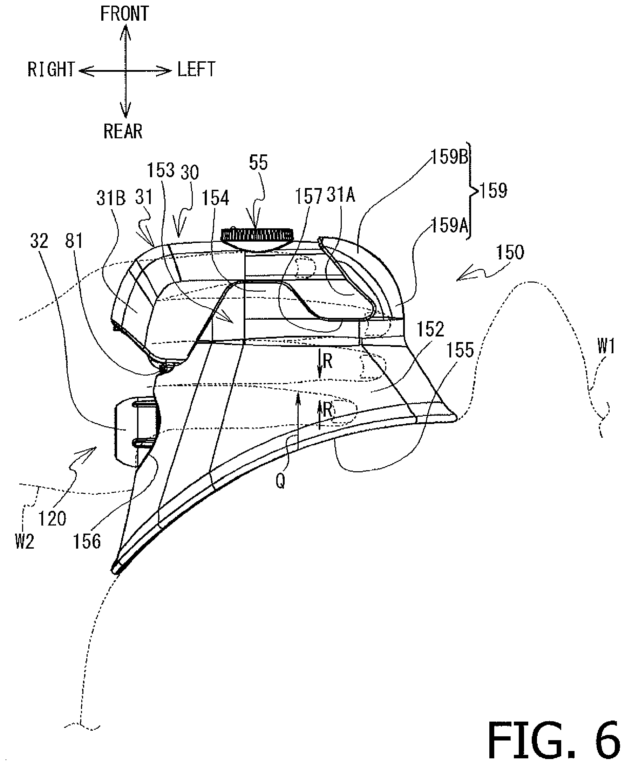

The eyecup 150 has a main body 152, a first opening 155, a second opening 156, a third opening 157, a mounting section 153 and an openable/closable section 159. According to the present embodiment, the eyecup 150 is a single member. That is, the main body 152, the mounting section 153, the first opening 155, the second opening 156, the third opening 157 and the openable/closable section 159 are formed integrally to each other. The main body 152 has a substantially cylindrical shape extending along the front-rear direction, a diameter of which becoming larger as advancing rearward. The main body 152 is elastically deformable in the front-rear direction, in the right-left direction and in the up-down direction. The first opening 155 is a rear end of the main body 152 and is opened toward the rear side. The first opening 155 has an elliptical shape elongated in the right-left direction. The first opening 155 extends so as to be curved rearward as advancing rightward. The first opening 155 is capable of closely contacting a face of the user with covering one eye of the user. According to the present embodiment, as an example, a left end of the first opening 155 contacts the face of the user at a portion between one eye and a nose, while a right end of the first opening 155 contacts the face of the user at a side portion of the face (see Fig. 6).

The second opening 156 is a circular opening piercing a right portion of the main body 152 in the right-left direction. Through the second opening 156, the socket 32 of the second holding part 120 is inserted. An inner diameter of the second opening 156 is slightly larger than an outer diameter of the socket 32. The third opening 157 is a front end of the main body 152 and is opened frontward. The third opening 157 has an elliptical shape elongated in the right-left direction when viewed from front. In an internal space surrounded by the third opening 157, a rear part of the main body 31 of the display part 30 is arranged. In a right side of the internal space surrounded by the third opening 157, the connection member 81 of the second holding part 120 is arranged. The third opening 157 is closed by a rear part of the main body 31 of the display part 30. That is, the operation part 55 is exposed to the front side from the third opening 157.

The mounting section 153 is provided at a front end of the main body 152. The mounting section 153 has a pair of first engaging sections 154. The pair of first engaging sections 154 are each plate-shaped having a thickness in the up-down direction, and are arranged on the right side with respect to the reflecting part 35 (see Fig. 3). In Fig. 4, one of the pair of first engaging sections 154 located on upper side is shown. One of the pair of first engaging sections 154 protrudes frontward from the substantially central part, in the right-left direction, of an upper part of the third opening 157. The other one of the pair of first engaging section 154 protrudes frontward from a substantially central part, in the right-left direction, of a lower part of the third opening 157. The pair of first engaging sections 154 engage with the main body 31 of the display part 30 such that the pair of first engaging sections 154 nip, in the up-down direction, the main body 31 in a state where the pair of first engaging sections 154 are elastically deformed in directions to separate from each other. According to the present embodiment, a static friction force caused between the pair of first engaging sections 154 and the main body 31 is an engaging force the pair of first engaging sections 154 engage with the main body 31. The maximum engaging force of the pair of first engaging sections 154 is the maximum static friction force caused between the pair of first engaging sections 154 and the main body 31.

The openable/closable section 159 is provided on the left end of the third opening 157. That is, the openable/closable section 159 is provided to be spaced leftward from a position on the rear side, along the imaginary line K2 (see Fig. 3), with respect to the reflecting part 35. The openable/closable section 159 includes a connection section 159A and a switching section 159B. The connection section 159A is connected to the third opening 157. The connection section 159A is arranged on the left side with respect to the main body opening 31A of the main body 3 1. The switching section 159B extends frontward from the connection section 159A. The switching section 159B includes a covering face 159C (see Fig. 7). The covering face 159C is an end surface of the switching section 159B in a counterclockwise direction about the connection section 159A in a plan view thereof.

The switching section 159B elastically deforms, in the right-left direction, between the first position (see Fig. 4) and the second position (see Fig. 7) making the connection section 159A as a fulcrum. The switching section 159B located at the first position extends with being curved to a right front direction from the connection section 159A, and covers a portion of the main body 31 from a front end to a left end of the main body opening 31A from outside. In this case, the covering face 159C covers the main body opening 31A by covering the reflecting part 35 from the front side and the right side. The switching section 159B prevents external light from entering inside the main body opening 31A from the front side. When the switching section 159B is located at the first position, it becomes possible to use the eyecup-attached HMD 1 as the VR. That is, the user can recognize the image light displayed on the display part 30 without visually recognizing an external scenery.

As shown in Fig. 7, the switching section 159B located at the second position extends rightward from the connection section 159A, and is spaced leftward further from the reflection part 35 (see Fig. 3) in comparison with a case when the switching section 159B is located at the first position. The switching section 159B located at the second position is arranged on the left side with respect to the reflecting part 35 over its extending direction. In this case, the switching section 159B is disengaged rightward with respect to the viewing field of the left eye of the user, and the covering face 159C is turned over frontward. The openable/closable section 159 opens the main body opening 31A to outside, thereby the external light being capable of entering inside the main body opening 31A from the front side. When the switching section 159B is located at the second position, it becomes possible to use the eyecup-attached HMD 1 as the AR. That is, the user can recognize the image light displayed on the display part 30 with the external scenery superimposed thereon.

Hereinafter, when the pads 8D and 8E, the first holding part 110 and the second holding part 120 shown in Fig. 1 are referred to collectively, a term "holding means" 80 (Fig. 1) will be used. The holding means 80 holds the display part 30 so as to be movable with respect to the user. Even when an external force acts on the display part 30, if the magnitude of the force with which the holding means 80 holds the display part 30 at a predetermined position is larger than the magnitude of the external force acting on the display part 30, the display part 30 is held without being displaced from the predetermined position.

According to the present embodiment, the holding force of the holding means 80 includes a first holding force, a second holding force and a third holding force. The first holding force is a static friction force generated, at the first holding part 110, among the sphere section 21A, the recess 23A and the pressing part 24 (see Fig. 2). The second holding force is a static friction force generated, at the second holding part 120, among the sphere section 41A, the recess 33A and the pressing part 34 (see Fig. 3). The third holding force is a static frictional force generated between the pair of pads 8D and 8E and the head of the user (see Fig. 1). Directions of the first holding force, the second holding force and the third holding force are opposite to the external forces acting on the display part 30, respectively. If the magnitudes of the first holding force, the second holding force and the third holding force are larger than the magnitudes of the external forces acting on the display part 30, respectively, even if the external forces act on the display part 30, the display part 30 is held in the predetermined position continuously. It is noted that the maximum values of the first holding force, the second holding force and the third holding force are maximum static friction forces corresponding to the respective holding forces.

Referring to Fig. 4, a method of attaching the eyecup 150 to the display part 30 will be generally described. The switching section 159B is arranged at the first position. The user locates the pair of first engaging sections 154 on the rear side with respect to the main body 31, and inserts the socket 32 in the second opening 156 of the eyecup 150 from left. After the socket 32 has been inserted through the second opening 156, the second opening 156 contacts the right surface of the connection member 81. The user expands the pair of first engaging sections 154 so as to be spaced from each other, and rotates the eyecup 150 about the second opening 156. As the eyecup 150 is rotated, the rear part of the main body 31 is arranged inside the internal space of the third opening 157. The eyecup 150 rotates until the pair of first engaging sections 154 are located at both ends, in the up-down direction, with respect to the main body 31. At this stage, the switching section 159B located at the first position closes the main body opening 31A of the main body 31. Thereafter, the user releases his/her hands from the pair of first engaging sections 154. With this operation, the pair of first engaging section 154 closely contacts the main body 31 and engages therewith, thereby the mounting section 153 being attached to the main body 31.

Referring to Figs. 1 - 3 and 6, a method for the user to move the display part 30, to which the eyecup 150 has been attached according to the above-described method, to a desired position will be described. According to the present embodiment, a position the user desires to locate the display part 30 is a position where the first opening 155 of the eyecup 150 covers the eye of the user and closely contacts the face of the user. Before moved, the display part 30 is, for example, arranged to be spaced from the face of the user in an upper right direction(not shown), and the mounting fixture 8 is mounted on the head of the user. In Fig. 6, the left side face of the user is indicated by two-dotted lines W1, and the left hand of the user is indicated by two-dotted lines W2.

The user grasps the eyecup 150 with one hand and urges the display part 30 so as to be located at a position in front of the left eye of the user. The arm 9 rotates about the sphere section 21A with respect to the mounting fixture 8, and the display part 30 and the eyecup 150 rotate with respect to the arm 8. As a result, the first opening 155 covers the left eye of the user and contacts the face of the user (see Fig. 6).

As shown in Fig. 6, the user urges the eyecup 150 rearward. Then, the sphere section 41A of the second holding part 120 (see Fig. 3) rotates, and the main body 31 elastically deforms in a direction such that the first opening 155 and the third opening 157 approach each other (c.f., direction of arrow R). The first opening 155 is urged toward the face of the user and closely contact the same over the peripheral direction based on the imaginary ling K2 (see Fig. 3). With this configuration, the external light is prevented from entering the main body opening 31A. Then, the user releases his/her hand from the eyecup 150.

A relationship between the elastic force generated on the main body 31 and the holding forces of the holding means 80 after the user has released his/her hand from the eyecup 150 will be described. When the elastic force generated by the elastic deformation of the main body 31 is transmitted to the face of the user through the first opening 155, the eyecup 150 receives a reactional force from the face of the user through the first opening 155. Hereinafter, the elastic force generated by the elastic deformation of the main body 31 will be referred to as an "elastic force of the main body 31", and the reactional force the eyecup 150 receives from the face of the user due to the elastic force of the main body 31 will be referred to as a "reactional force the eyecup 150 receives". The reactional force the eyecup 150 receives corresponds to an external force which is directed frontward and acts on the display part 30. A direction of the reactional force the eyecup 150 receives (arrow Q) is opposite to the direction of the elastic force of the main body 31 transmitted to the face of the user. Further, the magnitude of the reactional force the eyecup 150 receives is the same as the magnitude of the elastic force of the main body 31 transmitted onto the face of the user. The magnitude of the elastic force of the main body 31 (that is, the magnitude of the reactionaL force the eyecup 150 receives) becomes the largest when at least a part of the inner surface of the main body 31 contacts the face of the user.

According to the present embodiment, equations (1) - (3) are satisfied:

$$N1 \geq Q \quad \cdots\cdots (1)$$

$$N2 \geq Q \quad \cdots\cdots (2)$$

$$N3 \geq Q \quad \cdots\cdots (3)$$

where, N1 is the first holding force of the holding means 80, N2 is the second holding force of the holding means 80, N3 is the third holding force of the holding means 80, and Q is the reactional force. The equations (1) - (3) indicate that the magnitude of the holding force of the holding means 80 is equal to or larger than the maximum magnitude of the elastic force of the main body 31.

In the equations (1) - (3), since the reactional force the eyecup 150 receives is directed frontward, each of N1, N2 and N3 is a static frictional force directed rearward. Since the equations (1) - (3) are satisfied, even if the user released his/her hand from the main body 31 which is elastically deformed, the eyecup 150 and the display part 30 are continuously held without being displaced with the main body 31 being in a elastically deformed state. According to the configuration, the user can continuously enjoy the desired light-blocking state and wearing feel.

Now, description will be given regarding a relationship between the elastic force of the main body 31 after the user has released his/her hand from the eyecup 150 (i.e., the reactional force the eyecup 150 receives) and the engaging force of the pair of the first engaging sections 154). Given that the engaging force of the pair of first engaging sections 154 is T, equation (4) is satisfied. The equation (4) indicates that the magnitude of the engaging force of the pair of first engaging sections 154 is equal to or larger than the maximum magnitude of the elastic force of the main body 31.

$$T \geq Q \quad \cdots\cdots (4)$$

With the above configuration, even if there is generated a reactional force from the eyecup 150, the relative positions between the pair of first engaging sections 154 and the display part 30 will not be shifted.

In the above description, description is given regarding a limited case where the reactional force the eyecup 150 receives is directed frontward. It is noted that when the reactional force includes a vector component in the right-left direction, a similar explanation could be given. There could be a case where, in order to obtain the desired light-blocking state and the wearing feel, the user urges the main body 31, for example, in the right rear direction with the first opening 155 being in contact with the face of the user. In such a case, the reactional force the eyecup 150 receives is directed to the front left direction. The first holding force, the second holding force and the third holding force after the user released his/her hand from the eyecup 150 are all directed to the right rear side. Even in such a case, when the equations (1) - (3) are satisfied, the eyecup 150 and the display part 30 are continuously held without being displaced with the main body 31 being elastically deformed. Further, even in such a case, when the equation (4) is satisfied, the positional relationship between the display part 30 and the eyecup 150 is unchanged.

Referring to Figs. 4 and 7, a method for the user to switch a usage of the eyecup-attached HMD 1 from a usage as the VR to the usage as the AR will be described. The display part 30 is arranged at the above-described user-desired position. The user holds the switching section 159B of the openable/closable section 159 with one hand and urges the same leftward. Then, the switching section 159B is elastically displaced from the first position (see Fig. 4) to the second position (see Fig. 7). The external light enters inside the main body opening 31 from the front side. It becomes possible to use the eyecup-attached HMD 1 as the VR. It is noted that the openable/closable section 159 may be formed as a thin plate shape of which thickness is less than that of the main body 152. Since the thickness of the switching section 159B is less than the thickness of the main body 152, the switching section 159B located at the second position is easy to keep an attitude that the covering face 159C is turned frontward. Further, hardness of the openable/closable section 159 may be smaller than hardness of the main body 152. Even in such a case, the switching section 159B located at the second position is easy to keep an attitude that the converging face 159C is turned frontward.

As described above, the force with which the holding means 80 holds the display part 30 is larger than the reactional force received from the eyecup 150. In other words, the force with which the holding means 80 holds the display part 30 is equal to or larger than the maximum magnitude of the elastic force of the main body 31. Accordingly, the display part 30 is held, at the desired position where the user press contacts the eyecup 150 onto his/her face, continuously by the holding means 80. Further, the eyecup 150 is capable of continuously maintaining the elastically deformed state with which the user can obtain the desired light-blocking state and the wearing feel. Therefore, the eyecup-attached HMD 1 with which the user-desired light-blocking state and the wearing feel can be continuously maintained at a position where the first opening 155 of the eyecup 150 closely contacts the user's face is realized. As above, the eyecup-attached HMD 1 capable of stably holding the display part 30 at a position where the eyecup 150 closely contacts the face of the user is realized.

Since the magnitude of the engaging force of the pair of first engaging sections 154 with respect to the display part 30 is larger than the maximum magnitude of the elastic force of the main body 31, even if the eyecup 150 receives the reactional force from the face of the user, a positional relationship between the eyecup 150 and the display part 30 remains unchanged. Therefore, the display part 30 is continuously held at the desired position where the user press contacts the eyecup 150 to the user's own face. Therefore, it is possible to continuously maintain the state where the eyecup 150 is elastically deformed so that the user can obtain the desired light-blocking state and the wearing feel.

The eyecup 150 is attached to the main body 31 of the display part 30 in a state where the socket 32 is inserted through the second opening 156. Accordingly, the eyecup 150 hardly drops from the main body 31, and loss of the eyecup 150 can be prevented.

Since the switching section 159B is elastically displaceable between the first position and the second position, the amount of the external light entering the main body opening 31A from the front side changes. The user can adjust the amount of external light incident on the user's own left eye. Further, since the eyecup 150 is an individual member, in comparison with a case where the main body 152 and the openable/closable section 159 are formed of members different from each other, a manufacturing cost can be saved. Further, since the user can switch the position of the switching section 159B without using another member different from the eyecup 150, user's labor to switch the position of the switching section 159B can be reduced.

Since the reflecting part 35 is the half mirror capable of letting the external light pass therethrough, when the switching section 150B is arranged to the second position, the user can use the eyecup-attached HMD 1 so that it serves as the AR. Further, when the switching section 159B is arranged to the first position, the user can use the eyecup-attached HMD 1 so that it serves as the VR. Thus, the user can use the eyecup-attached HMD 1 as the AR or the VR with use of a single member (i.e., the eyecup 150) provided with the switching section 159B.

The switching section 159B located at the second position is arranged on the left side with respect to the reflecting part 35. Since the switching section 159B located at the second position is arranged within a blind area of the viewing field of the left eye of the user, it does not block the viewing field of the user. Accordingly, the user can use the eyecup-attached HMD 1 without discomfort when it is used as the VR.

The user can adjust focusing of the display part 30 by rotating the operation part 55 about the rotational axis P. It could be stated that the user can perform an operation related to the display part 30 by rotating the operation part 55. Even if the eyecup 150 is attached to the main body 31, the third opening 157 exposes the operation part 55 frontward. Therefore, the user can perform an operation related to the display part 30 without removing the eyecup 150 from the display part 30. Accordingly, the user can easily perform an operation related to the display part 30.

In the above-described embodiment, the mounting fixture 8 is an example of a "head mounting part" according to the present disclosures. The image light generation part 37 is an example of an "image forming part" according to the present disclosures. The rear direction is an example of a "first direction" according to the present disclosures. The left direction is an example of an "emit direction" according to the present disclosures.

The above-described embodiment can be modified in various ways. Instead of the eyecup 150 being a single member, for example, the main body 152, the pair of first engaging sections 154 and the openable/closable section 159 may be made of different materials. The eyecup 150 may be formed, for example, of urethane rubber instead of the silicon rubber. Further, the eyecup 150 may be made of translucent material instead of light-blocking material. That is, the eyecup 150 may be made of material which lowers an intensity of light passing therethrough. The operation part 55 may be configured to adjust, for example, the light amount of the image light generated by the image light generation part 37 instead of being configured to adjust the focusing of the display part 30. Still further, the display part 30 may not be provided with the reflection part 35. For example, if tire image light generation part 37 and the lens unit 36 are accommodated in the main body 31 having a hollow box shape elongated in the front-rear direction, the user can visually recognize the image light emitted rearward by the image light generation part 37.

The first opening 155 needs not necessarily closely contact the face of the user over the peripheral direction based on the imaginary line K2. For example, at a part of the first opening 155 in the peripheral direction based on the imaginary line K2, a recess depressed frontward may be provided. In such a case, as the user urges the eyecup 150 toward the user's own face, the first opening 155 partially contacts the face of the user in the peripheral direction based on the imaginary line K2.

It is noted that the thickness of the openable/closable section 159 may be equal to or larger than the thickness of the main body 152. In such a case, for example, a specific engaging part engaging the switching section 159B at the second position with the main body 152 may be provided. The specific engaging part may include, for example, a first engaging strip provided to an end surface of the switching section 159B opposite to the covering face 159C and a second engaging strip provided to the left end surface of the main body 152. As the first engaging strip and the second engaging strip engage with each other, the switching section 159B can maintain, at the second position, an attitude that the covering face 159C is turned over frontward. It is noted that the first engaging strip and the second engaging strip may be provided with detachable/attachable adhering part. Further, instead of the first engaging strip, a convex part may be provided. In such a case, instead of the second part, a convex part may be provided. In such a case, instead of the second engaging strip, a recess engageable with the convex part is provided.

The shape of the eyecup 150 is not necessarily be limited to the one shown in Figs. 1, 4 and 5. It is general that a skeleton of the face of the user may be greatly different based on a gender and a race of the user, and the shape of the eyecup 150 can be modified variously in accordance with the skeleton of the face of the user. Further, the eyecup 150 may be used when a user wearing glasses uses the HMD 10, instead of being used when a user with naked eyes uses the HMD 10. In such a case, the first opening 155 is formed to have a larger shape than the shape shown in Fig. 5 so that the eyecup 150 can cover a lens of the glasses of the user.

The holding means 80 may have, for example, a flexible arm connecting the mounting fixture 8 and the main body 31 instead of having the arm 9, the first holding part 110 and the second holding part 120. The flexible arm is deformed when an external force larger than a predetermined magnitude is applied. As the flexible arm is deformed, the display part 30 can be moved to the user's desired position and held thereat. Even if an external force less than the predetermined magnitude is applied to the flexible arm, the flexible arm is not deformed since a force originated from rigidity of the flexible arm (hereinafter, referred to as resistance force) overcomes the external force. That is, the resistance force of the flexible arm serves as the force with which the flexible arm holds the display part 30. If the magnitude of the force with which the flexible arm holds the display part 30 is larger than the maximum magnitude of the elastic force of the main body 31, similarly to the above embodiment, the eyecup 150 is continuously held at the positon where the eyecup 150 closely contacts the face of the user.

The pair of first engaging sections 154 may be aligned, for example, in the right-left direction instead of the up-down direction. Even in such a case, the pair of first engaging section 154 closely contact and engage with the main body 31 of the display part 30 with being elastically deformed in a direction where the pair of first engaging sections 154 separate from each other. Further, the pair of first engaging sections 154 may be, for example, shaft-shaped extending frontward from the main body 152, instead of being plate-shaped extending frontward from the main body 152. In such a case, the pair of first engaging sections 154 may engage with the display part 30 by engaging with a pair of engaging holes (not shown) formed on the main body 31 of the display part 30, respectively. In such a configuration, a force necessary for the user to remove the first engaging sections 154 from the engaging holes of the main body 31 corresponds to the engaging force with which the first engaging sections 154 engage with the display part 30.

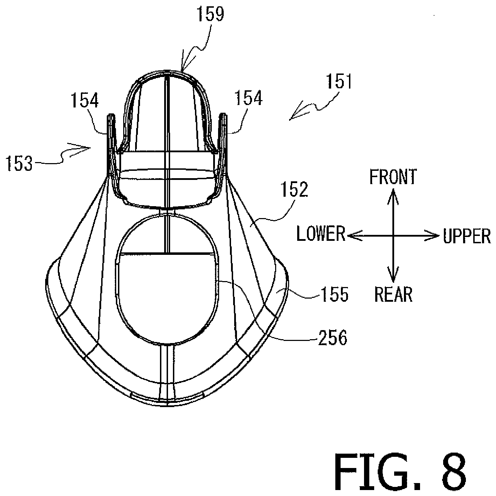

Fig. 8 shows an eyecup 151 which is a modification of the eyecup 150 (see Fig. 4). The eyecup 151 is attachable to the main body 31 of the display part 30. The eyecup 151 has a second opening 256 instead of the second opening 156 (see Fig. 4). The second opening 256 has an elliptical shape elongated in the front-rear direction. In a longitudinal direction of the second opening 256, there is a clearance between the second opening 256 and the socket 32 (see Fig. 4). When the eyecup 151 is attached to the main body 31, according to a method similar to the method of attaching the eyecup 150 to the main body 31, the user inserts the socket 32 in the second opening 256. The user can adjust the position at which the pair of first engaging sections 154 engage with the main body 31 in the front-rear direction within the limit of an amount of a clearance between the second opening 256 and the socket 32 in the longitudinal direction of the second opening 256. Therefore, the user can adjust the position where display part 30 is attached to the eyecup 151 in an approaching direction or a separating direction with respect to the user's own eye. It is noted that the second opening 256 may have, for example, an elliptical shape elongated in the up-down direction, instead of the elliptical shape elongated in the front-rear direction. Even in such a case, to the user can adjust a position where the first engaging sections 154 engage with the main body 31 along a longitudinal direction of the second opening 256.

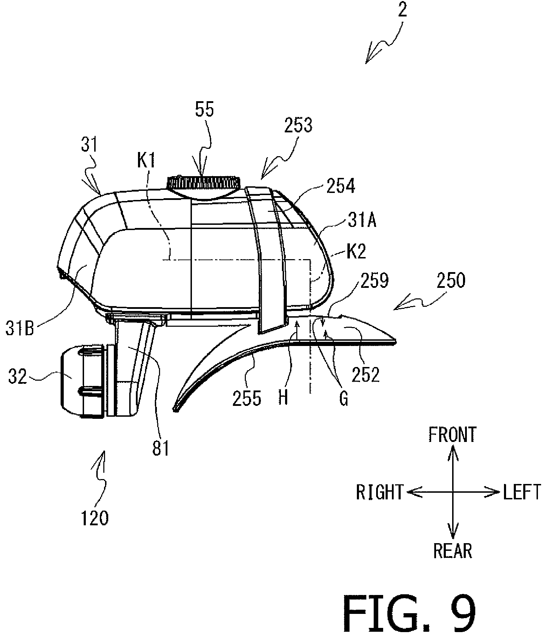

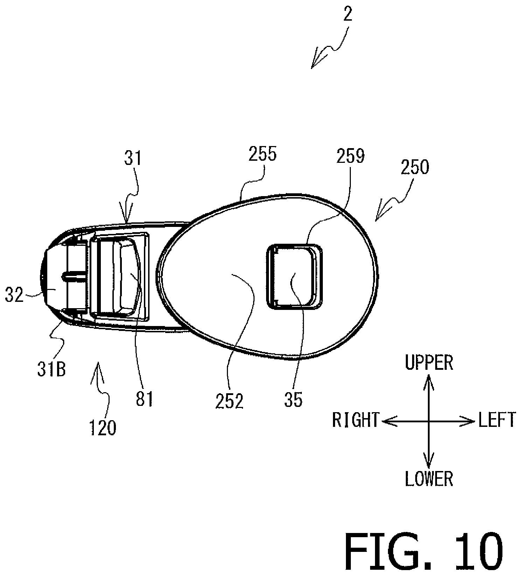

Referring to Figs. 9 and 10, an eyecup-attached HMD 2 according to a second embodiment of the present disclosures will be described. In the following description, members similar to those in the first embodiment are described using the same reference numbers. The eyecup-attached HMD 2 has the same configuration as that of the eyecup-attached HMD 1 except that the eyecup-attached HMD 2 has an eyecup 250 instead of the eyecup 150 (see Fig. 4). In Figs. 9 and 10, the mounting fixture 8, the first holding part 110 and the arm 9 which are shown in Fig. 1 will be omitted.

The configuration of the eyecup 250 will be described based on a state where the eyecup 250 is attached to the display part 30. The eyecup 250 includes a main body 252, a first opening 255, a mounting section 253 and a positioning opening 259. The eyecup 250 is formed of the same material of which the eyecup 150 is formed. The main body 252 is a plate-like member having an elliptical shape elongated in the right-left direction when viewed from the rear side. The main body 252 is curved frontward, and a substantially central part, in the right-left direction and in the up-down direction, of the main body 252 is a front end. The first opening 255 is a rear end of the main body 252, and has an elliptical shape elongated in the right-left direction. The first opening 255 can be closely contacted on the face of the user with covering one eye of the user.

The mounting section 253 is provided to the front end of the main body 252. The mounting section 253 has a second engaging section 254. The second engaging section 254 is an annular belt-like member when viewed from a side, and extends in a peripheral direction based on an optical axis K1. A rear end of the second engaging section 254 is connected to the front end of the main body 252. The second engaging section 254 closely contacts the main body opening 31A from outside over the peripheral direction based on the optical axis K1 with being expanded, thereby the second engaging section 254 engaging with the main body opening 31A. A positioning opening 259 is a square hole pieced, in the front-rear direction, through the main body 252 on the left side with respect to the second engaging section 254. When viewed from the rear side, the reflecting part 35 is accommodated inside the positioning opening 259 (see Fig. 10).

A method of attaching the eyecup 250 to the display part 30 will be described. The user expands the second engaging section 254 and inserts the main body opening 31A from the left side. When the reflecting part 35 is arranged inside the positioning opening 259 when viewed from the rear side, the user releases his/her hand from the second engaging section 254. Then, the second engaging section 254 engages with the main body opening 31A of the main body 31, and the eyecup 250 is attached to the display part 30.

In the second embodiment, the user positions the eyecup 250 attached to the main body 31 in the right-left direction by arranging the reflecting part 35 inside the positioning opening 259 when viewed from the rear side. The position in the right-left direction where the eyecup 250 is positioned is a position which is easy for the user to intuitively understand. Accordingly, the user can intuitively understand the direction in which the main body 31 is inserted through the second engaging section 254, and it becomes possible to prevent a wrong operation of inserting a base end section 31B of the main body 31 through the second engaging section 254.

A case where the user urges the main body 252 rearward with the first opening 255 covering one eye of the user and contacting the face of the user will be described. As the user urges the main body 31 rearward, the main body 252 elastically deforms in a direction such that the positioning opening 259 and the first opening 255 approach each other (i.e., direction of arrow G), and the first opening 255 closely contacts the face of the user over the peripheral direction based on the imaginary line K2. When the user releases his/her hand from the main body 31, the eyecup 250 receives a reactional force (arrow H) from the face of the user through the first opening 255. The magnitude of the reactional force the eyecup 250 receives is the same as the magnitude of an elastic force which is generated as the main body 252 elastically deforms. The magnitude of the reactional force the eyecup 250 receives becomes the maximum when at least a part of the inner surface of the main body 252 contacts the face of the user.

In the second embodiment, similarly to the first embodiment, each of the first holding force, the second holding force and the third holding force is larger than the maximum magnitude of the elastic force which is generated when the main body 252 is elastically deformed. Therefore, even when the user releases his/her hand from the main body 31 when the main body 252 is in a deformed state, the display part 30 and the eyecup 250 are continuously held at the position where the first opening 255 contacts the face of the user. In the second embodiment, the positioning opening 259 is an example of a "position adjustment part" of the present disclosures.

It is noted that the second engaging section 254 may be provided, for example, with a recess which is depressed in a direction separating from the optical axis K1. In such a case, the second engaging section 254 partially closely contacts, in the peripheral direction based on the optical axis K1, the main body opening 31A from outside.

## EXPLANATION OF REFERENCE SIGNS

| 1, 2 | eyecup-attached HMD |
|---|---|
| 8 | mounting fixture |
| 10 | HMD |
| 15 | holding mechanism |
| 30 | display part |
| 35 | reflecting part |
| 37 | image light generation part |
| 55 | operation part, |
| 80 | holding means |
| 150, 151, 250 | eyecup |
| 152, 252 | main body |
| 153, 253 | mounting section |
| 154 | first engaging section |
| 155, 255 | first opening |
| 156, 256 | second opening |
| 157 | third opening |
| 159B | switching section |
| 254 | second engaging section |
| 259 | positioning opening |
| K1 | optical axis |

## Claims

1. An eyecup-attached head-mounted display, comprising:

   a head-mounted display including:

      a display part configured to display an image;
      a head mounting part to be mounted on a head of a user; and
      a holding means provided to the head mounting part and configured to hold the display part; and

   an eyecup formed of material which blocks light or lowers intensity of light, and configured to be attached to the display part,
   wherein the eyecup includes:

      a main body which is elastically deformable;
      a mounting section provided to the main body and to be mounted on the display part; and
      a first opening arranged on an opposite side to the mounting section with respect to the main body, the first opening being opened to expose at least a part of the display part,

   wherein the holding means includes a holding mechanism configured to hold the display part so as to be movable relative to the head mounting part,
   wherein a magnitude of a force with which the holding means holds the display part is equal to or larger than a maximum magnitude of an elastic force which is generated as the main body is elastically deformed in a direction where the first opening and the mounting section approach each other.

2. The eyecup-attached head-mounted display according to claim 1,
   wherein the mounting section includes a first engaging section configured to engage with the display part, and
   wherein a magnitude of the force with which the first engaging section engages with the display part is equal to or larger than the maximum magnitude of the elastic force.

3. The eyecup-attached head-mounted display according to claim 1 or 2,
   wherein the eyecup has a second opening, which is different from the first opening, provided to the main body, the holding mechanism being inserted through the second opening.

4. The eyecup-attached head-mounted display according to claim 3, wherein the second opening has an elliptical shape.

5. The eyecup-attached head-mounted display according to any one of claims 1 - 4,
   wherein the display part includes:

      an image forming part configured to emit image light as formed; and
      a reflecting part arranged on an emit direction side, with respect to the image forming part, the image forming part emitting the image light in the emit direction, the reflecting part being inclined with respect to an optical axis of the image light emitted by the image forming part, the reflecting part reflecting at least a part of the image light in a first direction intersecting the emit direction,

   wherein the eyecup has a switching section integrally arranged at an end of the mounting section and configured to elastically deform between a first position and a second position, the first position being a position spaced from a particular position at which the switching section faces the reflecting part from the first direction and covers at least a part of the reflecting part, the second position being a position spaced from the particular position and spaced further from the reflecting part in comparison with a case where the switching section is located at the first position.

**6.** The eyecup-attached head-mounted display according to claim 5,
wherein the reflecting part is a half mirror through which external light can pass.

**7.** The eyecup-attached head-mounted display according to claim 5 or 6,
wherein the switching section located at the second position is located on the emit direction side with respect to the reflecting part.

**8.** The eyecup-attached head-mounted display according to any one of claim 1 - 7,
wherein the head-mounted display includes an operation part provided to the display part, operations regarding the display part being performed through the operation parts,
wherein the eyecup has a third opening which exposes the operation part, the third opening being closed by the display part.

**9.** The eyecup-attached head-mounted display according to claim 4,
wherein the display part includes:

an image forming part configured to emit image light as formed; and
a reflecting part arranged on an emit direction side, with respect to the image forming part, in which the image forming part emits the image light, the reflecting part being inclined with respect to an optical axis of the image light emitted by the image forming part, the reflecting part reflecting at least part of the image light to a first direction intersecting with the emit direction,

wherein the second opening has an elliptical shape elongated in a direction parallel with the first direction.

**10.** The eyecup-attached head-mounted display according to claim 1,
wherein the display part includes:

an image forming part configured to emit image light as formed; and
a reflecting part arranged on an emit direction side, with respect to the image forming part, in which the image forming part emits the image light, the reflecting part being inclined with respect to an optical axis of the image light emitted by the image forming part, the reflecting part reflecting at least part of the image light to a first direction intersecting with the emit direction,

wherein the mounting section includes a second engaging section extending in a peripheral direction based on an optical axis of the image forming part, and engaging with the display part, and
wherein the eyecup has a position adjustment part configured to position an engaging position where the second engaging section engages with the display part.

FIG. 1

FRONT

LEFT ← → RIGHT

REAR

# FIG. 2

FIG. 3

31B  31C  31  153  55  154  31A

159B
} 159
159A

157

81

150

32

120

156

152  155

FRONT

RIGHT ⟵——⟶ LEFT

REAR

# FIG. 4

FIG. 5

FRONT

RIGHT ←——→ LEFT

REAR

FIG. 6

FIG. 7

159

154        154

153        151

152

FRONT

LOWER ←→ UPPER

155

REAR

256

FIG. 8

FIG. 9

2

31   255   259   250

32

31B   81   252   35

120

UPPER

RIGHT ← → LEFT

LOWER

# FIG. 10

**INTERNATIONAL SEARCH REPORT**

| International application No. |
| --- |
| PCT/JP2017/014190 |

A. CLASSIFICATION OF SUBJECT MATTER
*H04N5/64*(2006.01)i, *G02B27/02*(2006.01)i

According to International Patent Classification (IPC) or to both national classification and IPC

B. FIELDS SEARCHED

Minimum documentation searched (classification system followed by classification symbols)
H04N5/64, G02B27/02

Documentation searched other than minimum documentation to the extent that such documents are included in the fields searched
| Jitsuyo Shinan Koho | 1922-1996 | Jitsuyo Shinan Toroku Koho | 1996-2017 |
| Kokai Jitsuyo Shinan Koho | 1971-2017 | Toroku Jitsuyo Shinan Koho | 1994-2017 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>A | WO 01/37558 A1 (Olympus Optical Co., Ltd.),<br>25 May 2001 (25.05.2001),<br>page 1, lines 2 to 6; page 7, lines 12 to 14;<br>page 17, line 21 to page 18, line 4; page 20,<br>line 24 to page 21, line 2; page 28, line 10 to<br>page 29, line 10; page 29, lines 21 to 24; page<br>31, line 7 to page 33, line 2; fig. 4 to 6, 11C<br>& US 2002/0149545 A1<br>paragraphs [0004], [0027], [0079], [0086],<br>[0112] to [0114], [0116], [0122] to [0132]; fig.<br>4 to 6, 11C<br>& WO 2001/037558 A1      & EP 1233616 A1<br>& AU 7956100 A | 1,3-4<br>2,5-10 |

| ☒ | Further documents are listed in the continuation of Box C. | ☐ | See patent family annex. |

| * | Special categories of cited documents: |
| --- | --- |
| "A" | document defining the general state of the art which is not considered   to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>    15 June 2017 (15.06.17) | Date of mailing of the international search report<br>    27 June 2017 (27.06.17) |
| --- | --- |
| Name and mailing address of the ISA/<br>    Japan Patent Office<br>    3-4-3,Kasumigaseki,Chiyoda-ku,<br>    Tokyo 100-8915,Japan | Authorized officer<br><br>Telephone No. |

Form PCT/ISA/210 (second sheet) (January 2015)

**INTERNATIONAL SEARCH REPORT**

International application No.

PCT/JP2017/014190

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2005-181861 A  (Sony Corp.), 07 July 2005 (07.07.2005), paragraphs [0001], [0003] (Family: none) | 1-10 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013186330 A